Europäisches Patentamt

European Patent Office

Office européen des brevets

(11) Publication number: **0 136 158**
**A2**

## EUROPEAN PATENT APPLICATION

(21) Application number: **84306426.2**

(22) Date of filing: **20.09.84**

(51) Int. Cl.⁴: **A 21 D  2/18,** A 21 D  8/04,
A 21 D  13/08

(30) Priority: **20.09.83  US 533946**

(43) Date of publication of application: **03.04.85**
**Bulletin 85/14**

(84) Designated Contracting States: **AT BE CH DE FR GB IT
LI LU NL SE**

(71) Applicant: **NABISCO BRANDS INC., Nabisco Brands
Plaza, Parsippany New Jersey 07054 (US)**

(72) Inventor: **Maselli, John A., 45 Old Highway, Wilton
Connecticut 06897 (US)**

(74) Representative: **Thomas, Roger Tamlyn et al, D. Young &
Co. 10 Staple Inn, London WC1V 7RD (GB)**

(54) **Baked products exhibiting stable properties characteristic of freshly-baked products.**

(57) Disclosed herein are flour-based baked products, particularly cookies, which exhibit storage-stable textural properties characteristic of corresponding freshly-baked products. The cookies are prepared by impregnating at least portions of the surface of a cookie dough bakeable to a chewy cookie product with a crispness-contributing component to provide a finished, baked cookie exhibiting a combined chewy and crisp texture characteristic of freshly-baked cookies.

EP 0 136 158 A2

## BAKED PRODUCTS EXHIBITING STABLE PROPERTIES CHARACTERISTIC OF FRESHLY-BAKED PRODUCTS

### Field of the Invention

The present invention relates to baked flour-based confectionary products, and, more particularly, to products of this type which retain their freshly-baked characteristics in terms of flavor, texture, and appearance. The invention also relates to processes for preparing such products, and to unbaked products from which such baked products can be prepared.

### Background of the Invention

In the past baked confectionary products have been prepared which are of the ready-to-serve variety, i.e., finished, fully-baked products intended to be distributed and sold to consumers many days after preparation and packaging by the manufacturer. Ready-to-serve packaged cookies which closely mimic the organoleptic properties associated with freshly-baked cookies are also known to the bakery arts.

The difficulty in manufacturing ready-to-serve cookies which retain a degree of moistness, chewiness or softness characteristic of fresh, home-baked cookies is known to be primarily a function of the dynamic loss of moisture from the baked cookie over time, typically a result of crystallization of the sugars (e.g. sucrose) present in cookie formulations. In recognition of this knowledge, the baking arts have provided a variety of methods aimed at retaining moisture and chewiness in cookie products by inhibiting the crystallization of sucrose present or employing sugars in the cookie formulation which have a lesser tendency to crystallize than sucrose. For example, it is known to manufacture ready-to-serve cookies wherein crystallizable sugars (e.g. sucrose)

are replaced, either in whole or in part, with non-crystallizable or slowly crystallizable sugars relative to sucrose under the same conditions. Such sugars include fructose, invert sugar (a mixture of fructose and dextrose), honey and the like which function to retain moisture in baked doughs or batters and, if crystallizable sugars such as sucrose remain present in the formulation, to inhibit the crystallization of such sugars. It is also known simply to add to conventional cookie formulations, materials other than sugars which also act as moisture retainers and crystallization inhibitors.

One means of providing ready-to-serve cookies with the desired textural crisp/moist combination characteristic of fresh, home-baked cookies is to prepare cookies which contain distinct, texturally differing regions. One region may contribute a crisp texture, while a second region contributes a soft, moist or chewy texture. One example of that approach is found in U.S. Patent No. 3,026,205 to Irwin M. Stone wherein a first conventional layer of sucrose-containing dough is overlaid with a second layer of sucrose-containing conventional dough which contains sufficient alpha-amylase to generate in this second layer products which are crystallization-resistant, bind water and interact with sucrose to thereby also retain its water binding capacity. The first sucrose-containing dough layer which is enzyme-free, on the other hand, bakes to a crisp texture.

Another example of cookie preparations following the approach described above is found in published European Patent

0136158

Application No. 0031718 (published July 8, 1981; application number 80304703.4). According to that application, two doughs are prepared, one dough containing conventional cookie ingredients including crystallizable sugars (sucrose) and the other dough containing conventional cookie ingredients with crystallization-resistant sugars (e.g., fructose, maltose, dextrose.) Lamination of the doughs and baking provides a cookie having discrete regions of chewy texture (attributable to the portion containing crystallization-resistant sugars) and discrete regions of crisp texture (attributable to the portion containing crystallizable sugars).

Another means which has been proposed for the production of baked products, such as cookies, which exhibit a stable textural crisp/moist combination characteristic of freshly-baked cookies, is the in situ development, in a single dough, of distinct dough regions which result, upon baking, in the production of a product having both crispy and chewy, moist textural regions.

An example of such an approach is found in U.S. Patent No. 2,801,921 to William Moses, wherein conventional sucrose-containing dry brownie or cookie mix formulations are augmented with the addition of invertase enzyme. With the addition of water to the dry mix to form a batter or dough which is then baked in appropriate form, the invertase effects inversion of the sucrose to invert sugar. The presence of the invert sugar so generated inhibits crystallization of the sucrose. This effect is localized, however, in the center of the cookie or brownie as a result of the inherent nature of the baking process, i.e., the higher temperatures achieved in the outer portions of the cookie dough during baking inactivate the enzyme and retard or prevent its inversion to sucrose in these portions. The inner portions of the cookie dough, owing to their insulation from direct heat and the considerable moisture therein, do not reach temperatures high enough to cause enzyme inactivation. The resultant product consists of a moist, chewy inner region surrounded by regions which are dry or crisp as a result of the unaffected sucrose crystallized in such regions.

Similar processes are described in the earlier-mentioned U.S. Patent No. 3,026,205 to Irwin M. Stone and U.S. Patent No. 4,344,969 to Rudolph W. Youngquist et al. In the Stone patent, doughs or batters are formulated which contain flour, sugar, shortening, water and the enzyme alpha-amylase. During baking, the alpha-amylase becomes quickly inactivated in the regions of the dough or batter which are either directly exposed to the oven heat or in contact with a conductive surface (e.g., a baking sheet or pan). In such regions, therefore, during normal baking the development of a dry, crisp crumb structure occurs. The internal portion of the dough does not, however, reach temperatures at which alpha-amylase becomes inactive. In these internal portions, therefore, the alpha-amylase is free to act upon the starches in the dough to produce therefrom dextrins and mono- and disaccharides which are non-crystallizable (or only slowly crystallizable), and which inhibit the crystallization of normally crystallizable sugars (e.g., sucrose). The resultant product contains soft, moist regions and dry, crisp regions. In the Youngquist et al. patent, enzymes such as invertase or amylases are employed to provide baked, ready-to-serve cookies with soft, moist chewy regions, with steps taken to inhibit enzyme activity in other regions so as to permit normal development of crystallized dry, crisp regions.

Although the foregoing procedures provide potentially technologically acceptable routes to the provision of cookies and other baked products which exhibit a combined crispy/chewy texture which persists after their actual preparation, difficulties exist in adapting these procedures to high-speed, high-volume commercial manufacturing techniques. For example, multiple-dough laminates (or equivalent techniques where multiple doughs are blended or mixed in a manner which retains discrete regions of each) pose difficult problems in the operation of equipment suitable for achieving the proper registration or alignment of each dough or the proper degree and extent of intermixing. In addition, the reliance upon multiple doughs necessarily involves multiple metering, blending, mixing and kneading devices for preparation of the doughs, greatly increasing the capital expenditure, operation and maintenance expenses.

## Summary of the Invention

As hereinafter described in detail the invention can provide flour-based baked dough products which exhibit, for substantial time periods after their manufacture, textural properties, as well as other physical, chemical and organoleptic properties, characteristic of the corresponding freshly-baked products; such storage-stable, ready-to-serve baked products exhibit the combination of crispness and chewiness characteristic of freshly-baked cookies.

The invention also extends to the provision of preform or unbaked products from which baked products

as above-described can be prepared.

Again as hereinafter described in detail the present invention can provide a process for manufacturing storage-stable, ready-to-serve baked products, as above-described, which is capable of being performed at high production rates, is easily controllable and which does not require extensive modification, replacement or duplication of conventional commercial equipment.

In the process hereinafter described a bakeable dough or batter formulated so as to provide a soft, moist, chewy baked product upon complete baking, is surface impregnated with a liquid readily-crystallizable sugar-containing component in an amount and concentration effective to cause sufficient sugar crystallization in the portions impregnated to provide a texturally crispy region in the finally baked product.

No attempt is made herein to distinguish between flour-containing baked products referred to by traditional "category" names: e.g., cookie, cake, biscuit, cracker, or the like, because the various products referred to by one of these "category" names are often virtually identical in major or basic ingredients to other products traditionally given different category names. Similarly, the terms batter and dough define overlapping compositions. Thus, the only significance which is ascribed to the foregoing terms and "category" names is that which can be ascribed on the basis of historical usage, rather than technical significance or applicability of the present invention.

In accordance with this invention, a baked, dough-based product may be made which, long after its initial preparation, substantially duplicates the combined crispy and chewy textural properties or impressions characteristic of freshly-baked products. While the invention is applicable to a wide variety of product shapes, sizes and formulations, the description will focus on the preparation of products recognizable as "cookies", i.e., small cakes which are prepared from doughs or batters which are formed either before or after baking.

The chewy regions of cookies prepared in accordance with this invention are provided through a bakeable dough component (which may or may not be enzyme-containing), while the crispy regions are imparted to the baked product through a separate liquid readily-crystallizable sugar containing component which is not dough-like, i.e., which is not per se bakeable to a final cookie product. By eliminating the requirement that crispy regions of the final product be provided by a bakeable cookie dough formulated to result in a crispy product when baked, the present invention is much more easily performed on commercial, high-speed equipment and is more easily controllable for the repeated production of products having uniform properties.

According to one embodiment of the present invention, a preformed cookie dough bakeable to a chewy cookie product is sprayed or coated on at least a part of its surface with a liquid readily-crystallizable sugar composition. As discussed in greater detail below, coating or spraying conditions and suitable cookie dough formulations can be chosen so as to achieve the desired degree of impregnation or penetration of the readily-crystallizable sugar composition such that the readily-crystallizable sugar becomes localized on and just beneath the surface of the cookie dough. Upon baking to the appropriate final end-point, the resultant cookie contains regions (contributed by the dough portions not impregnated) which remain soft and chewy even after prolonged storage, as well as crispy, dry regions (owing to the crystallization of the coated or sprayed sugar) in association with, or just above the soft and chewy cookie regions. By virtue of attainment of a reasonable depth of penetration of the readily-crystallizable sugar into the cookie dough, the final cookie presents a substantially uniform cookie appearance (as opposed to an iced or glazed product) characteristic of typical home-baked, single-dough cookies.

According to another embodiment of the present invention, a preformed cookie dough bakeable to a chewy cookie product is impregnated with a liquid composition containing a readily-crystallizable sugar component, via assisted penetration, e.g., with the use of puncturing means for providing impregnation sites on the surface of the preformed bakeable cookie dough. The liquid readily-crystallizable sugar component can be simultaneously impregnated into the dough at the time of puncturing, or the component can be impregnated into the dough by spraying or coating the liquid readily-crystallizable sugar component thereon after impregnation sites have been separately provided on the surface of the dough bakeable to a chewy product.

The foregoing embodiments of this invention, as well as other features thereof, are described in further detail hereinafter with reference to various illustrative compositions, products and methods.

### Detailed Description of the Invention

The baked cookies disclosed herein are of the so-called "crumb-continuous" type. In contrast to iced cookies, glazed cookies, filled cookies, sandwich-type cookies, etc., the crumb-continuous cookies disclosed herein are characterized by a substantially continuous cookie crumb matrix visibly extending throughout its cross section, typically interrupted only by the presence of additives separate from the dough such as nuts, chocolate chips, butterscotch chips, etc., conventionally employed in cookie products.

The baked cookies prepared in accordance with the present invention are also storage-stable both in the sense of microbial stability and maintenance of their freshly-baked textural dichotomy over long periods of time. Preferably, the cookies prepared in accordance with this invention maintain their crispy/chewy textural difference, found in the cookie shortly after baking, for at least about two weeks.

According to the invention, a cookie dough bakeable to a chewy cookie is prepared, and then a liquid readily-crystallizable sugar-containing composition is applied to the surface of the cookie. The liquid sugar composition penetrates into the cookie dough to provide a discrete region in the cookie dough which contains an amount of the crystallizable sugar component effective to provide a crispy and dry texture in the impregnated portion after the cookie is baked. Thus, the cookie dough is only partially impregnated with the readily-crystallizable sugar composition, leaving regions of dough bakeable to a chewy cookie unaffected.

Thus, surface impregnation is defined to mean a bulk flow of liquid readily-crystallizable sugar-containing composition into the crumb of the product to a depth less than the total cross-sectional dimension of the product in the direction of flow. This is distinguished from the simple application of coarse granular sucrose to the top of a sugar cookie under conventional conditions which retain the granular appearance on the surface of the product even after baking. It is also distinguished from the applica-tion of a frosting or icing to a baked product under conventional conditions which are meant to keep the flow of moisture into the product to an absolute minimum and to retain the frosting or icing on the exterior of the product.

The cookie dough bakeable to a chewy cookie can be formulated according to a number of methods. In general, the chewy cookie is characterized by the presence of a degree of bound moisture sufficient to prevent the chewy cookie from becoming dry over extended storage periods. Conventional cookie ingredients are employed in preparing the bakeable dough, i.e., flour, shortening, sugar and water, wherein these ingredients and their proportions are chosen so as to result in a chewy baked cookie and/or wherein additional ingredients are employed to achieve this result.

For example, one means of preparing a cookie which retains a degree of softness such that it resists the tendency of becoming a crispy-throughout cookie is through the use of a sugar component which is crystallization-resistant. As employed herein, the term crystallization-resistant sugar means a sugar component which contributes sweetness to the baked product made from the dough in which it is contained, is capable of binding water at the conditions of storage of the baked cookies (e.g. temperature, water content and water activity encountered) and is only slowly crystallizable (relative to sucrose), if at all, under the conditions of baking and storage employed.

The sugar component of the dough may wholly comprise crystallization-resistant sugars (e.g., fructose, invert sugar, honey, maltose, high fructose corn syrups and the like) or may comprise mixtures of normally crystallizable sugars (e.g. sucrose) with materials which inhibit the crystallization of crystallizable sugars at the conditions encountered during baking and storage of the cookie.

For example, sucrose, which is readily crystallizable under the conditions encountered during baking and within a baked cookie, can be employed in admixture with materials such as fructose, maltose, invert sugar, honey, dextrins, and the like which may *per se* be crystallization-resistant or which, when employed at sufficient levels (e.g., about 15% and above by weight of total sugar present in the cookie), will inhibit sucrose crystallization. Thus, the chewy dough employed may contain substantial amounts of readily-crystallizable sugars (e.g., about 75% by weight of total sugars) in combination with crystallization-resistant sugar, such that after surface impregnation with the readily-crystallizable liquid sugar component, the crystallizable sugar content in the impregnated region of the dough is above about 85% of the total sugars present in the impregnated region of the cookie dough.

Another means of preparing a chewy cookie is through formulation of a dough which generates *in situ*, during preparation and/or baking, a crystallization-resistant sugar component. Thus, for example, doughs can be prepared containing sucrose and invertase enzyme, whereby, during preparation and baking of the dough, enzymatic inversion of the sucrose to crystallization-resistant fructose and dextrose will occur, at least to a degree such that a sufficient quantity of these sugars is generated so as to inhibit the crystallization of unconverted sucrose. In a similar manner, a sucrose-containing dough can be prepared wherein carbohydrase enzymes (e.g., alpha-amylases, glucosidases) also are present. These enzymes will act upon starches present in the formulation (either present as part of the flour or as added

-11-

starch) to produce, during preparation and baking of the cookie, materials such as glucose, maltose, modified starches, dextrins, etc., in quantities sufficient to inhibit crystallization of the sucrose.

The enzymes employed are selected to act upon one or more of the components of the cookie dough to provide the components which serve to inhibit sucrose crystallization in the portions of the dough which are not impregnated. Of course, if the recipe for the cookie dough selected for use does not include a substrate or a sufficient amount of substrate for the enzyme, an additional ingredient may be added to the dough because it is a good substrate for the enzyme. Typically, the substrate for the enzyme will be either sugar or a starch component present in the cookie dough. For example flour, one of the basic cookie dough ingredients, typically has a starch content of about 50% by weight and provides a substrate for the enzymatic action of carbohydrases.

Enzymes which are suitable for use herein include glycosidases and polysaccharidases which, after acting upon carbohydrates, provide crystallization-resistant sugars as a by-product of their enzymatic activity. The choice of an enzyme within the glycosidase or polysaccharidase class to employ in a given cookie formulation will depend upon parameters which are conventionally considered in connection with enzymatic processes including baking temperatures and times, pH of the dough, water content, and the relative availability of the substrate to the action of the enzyme. Of course, baking conditions, pH of the cookie dough, etc. may also be adjusted to optimize the activity of the enzyme and, hence, the _in situ_ generation of the crystallization-resistant sugar component.

Glycosidases hydrolyze simple glycosides and oligosac-

-12-

charides. An example of a useful enzyme from that class is invertase which acts upon sucrose to provide invert sugar as the by-product of its enzymatic action. The entire quantity of sucrose present need not be inverted, so long as a sufficient amount of invert sugar has been produced to inhibit the crystallization of any unconverted sucrose in the baked dough. Invert sugar generated in situ is itself crystallization-resistant (or only slowly crystallizable relative to sucrose under similar conditions) and is capable of binding water.

Enzymes suitable for use herein also include polysaccharidases which act upon farinaceous materials to provide lower molecular weight saccharides such as glucose, maltose, modified starches, dextrins, etc. Enzymes of this type include the alpha- and beta-amylases. Mixtures of different enzymes may also be employed. For example, a primary enzyme (e.g., a bacterial alpha-amylase) may be employed to act upon a complex polysaccharide to provide simple glycosides, dextrins, and/or oligosaccharides which are then acted upon by the auxiliary enzyme (e.g., a glucosidase) to provide a greater amount of lower molecular weight sugars than would be produced by the action of the primary enzyme alone.

A particularly suitable enzyme for use herein is alpha-amylase which acts upon starches to provide maltose and dextrins. Alpha-amylases, such as those obtained from bacterial sources (B. subtilis or B. mesentericus) are known to be quite heat stable, and have been reported to be able to retain some activity at temperatures as high as 100°C. Enzymes of this type are commercially available and include Fresh-N, a product of G.B. Fermentation Industries, Inc., Charlotte, North Carolina, as well as Termamyl® and Bacterial Amylase Novo (BAN) which are products of Novo Industri A/S, Novo Allé, DK-2880 Bagsvaerd, Denmark.

When the only substrate for the enzyme is provided by the starch component of the flour in cookie dough, it is preferred to employ the equivalent of about 12 SKB units of alpha-amylase to as high as about 2,000 SKB enzyme activity units per 100 grams of starch in the dough. Stated alternatively, the number of SKB units/100 g of flour will typically fall within the range of about 6-1000 SKB units, because flour generally includes about a 50 weight percent portion of starch. SKB units may be assayed by the method of Sandstedt, Kneen and Blish, given in Cereal Chemistry Vol. 16,712 (1939).

When the substrate for the enzyme is provided by the starch component of flour, as well as an added pregelatinized starch component in the dough, the SKB units of enzyme employed may be reduced from that given above. For example, a preferred substrate comprises a pregelatinized starch component and cake flour in a weight ratio of about 1:1-10, e.g., 1:1.2-7, wherein the preferred enzyme activity units employed with such a substrate are about 50 to 1000 SKB units per 100 grams of the combined substrate.

The pH of the cookie dough to which the bacterial alpha-amylase is added is preferably about 6.0 to about 7.5 (most preferably about 6.2), assuming that the bacterial alpha-amylase-containing dough will be baked at a temperature of about 175°F to about 425°F. Thus, the cookie doughs employed in combination with alpha-amylase enzyme preferably do not include baking soda or any other ingredient which would place the pH of the dough outside the preferred pH range stated above.

In the context of the foregoing description, it will be appreciated that the enzymatic processes are designed to render the portions of dough which are not impregnated bakeable to a chewy cookie, and, preferably to provide at least about 15% by weight (of total sugar) of an enzymatically generated crystallization-resistant sugar component in the cookie dough portions which are not impregnated.

The flour and shortening employed in the dough bakeable to a chewy cookie are selected from conventional ingredient lines. For example, the shortening can be any edible fat or oil or mixtures thereof suitable for cooking or baking and may further include conventional food-grade emulsifiers. The flour can be any comminuted cereal grain or edible seed meal such as wheat flour, corn flour, corn starch, barley flour, and the like. The dough also will contain typical flavorants and colorants (including solid or semi-solid ingredients such as chocolate chips or raisins.)

The water content of the bakeable dough generally will be such that the moisture content of a cookie baked therefrom will be less than about 10% by weight, typically between about 4% to 8% by weight, and such that the water activity ($a_w$) of a cookie baked therefrom (in conjunction with the use of suitable water-binding materials in the formulation) will be in the range of from about 0.25 to 0.80.

As employed in the context of the present invention, the term "chewy" is intended to define textures which possess a discernible degree of plasticity. Chewiness also connotes impressions of softness and moistness. Crispness and chewiness can be described in terms of taste panel tests which take as standards the texture of fresh saltine crackers (rating of 0) and a freshly a baked cookie having a distinctly chewy texture throughout (rating of 10), i.e., chewy cookies prepared in accordance with the following recipe:

| 2/3 c. | sugar |
|---|---|
| 1/4 c. | butter or regular margarine |
| 1 tsp. | ground ginger |
| 1/2 tsp. | ground cinnamon |
| 1/2 tsp. | baking soda |
| 1/2 tsp. | salt |
| 1/2 tsp. | vanilla |
| 1 | egg |
| 1/2 c. | honey |
| 1 1/2 c. | sifted flour |

The cookies are prepared by combining 2/3 cup of sugar, butter, ginger, cinnamon, baking soda, salt and vanilla in a large mixing bowl and creaming the ingredients until they are light and fluffy. Next the eggs are added and beat in until the mixture is very fluffy. The honey is then blended in, followed by the blending in of the flour a little at a time. The dough is dropped by teaspoonfuls 2 1/2 inches apart onto a lightly greased baking sheet, baked at 350°F for about 12 minutes and removed at once from the baking sheet to racks to cool thoroughly.

Employing the rating scale described above, the chewy portion of the product of this invention preferably has a rating of at least 3 and most preferably at least 5. The crispy portion preferably has a rating of less than 5, and most preferably less than 2. The regions should show a difference in ratings of at least 2 units, and most preferably at least 5 units.

Apart from formulation variations designed to insure that the cookie dough is _per se_ bakeable to a chewy cookie, formula variations may also be practiced which cause the cookie dough to be more receptive to penetration or impregnation with the component contributing crispness, and to minimize interaction of its ingredients with the penetrating component which might adversely affect the development of crispness therein.

The crispness-contributing component employed in the present invention has the characteristics of being non-dough-like (i.e., not separately bakeable to a cookie-like product at the conditions at which the composite of this invention and the bakeable (chewy) cookie dough is baked) and capable of contributing a crisp texture to areas or regions where it is introduced onto and into the bakeable, chewy cookie dough.

The crispness contributed by this component is achieved through the use of sugars which are readily-crystallizable at the conditions at which the composite product is baked to a final cookie product. The sugars may consist solely of sucrose or can comprise mixtures of sucrose with other sugars of the type or in amounts which do not inhibit the crystallization of sucrose in the impregnated cookie product.

According to one embodiment of the present invention, the crispness-contributing sugar is sucrose which is applied to the bakeable chewy cookie dough in the form of an aqueous solution. For example, the chewy cookie dough may be surface impregnated with a concentrated solution of sucrose in water, e.g., about 35% up to about 70% sugar in water, or the sugar concentration may correspond to the maximum concentration of sugar in water at the temperature at which the sugar solution is applied to the cookie.

Alternatively, metastable or supersaturated aqueous solutions of sucrose may be employed. For example, water at a temperature of about 85°F up to about 190°F may be loaded with a quantity of dissolved sucrose above the maximum amount of sucrose soluble in the same volume of water at room temperature. Of

course, the sucrose solution must be sufficiently fluid to penetrate the dough. When such aqueous sucrose solutions are employed, it is preferred to apply the warm sucrose solution to the cookie dough after preliminarily heating the dough (i.e. during the early initial baking process) to approximately the temperature of the supersaturated sugar solution, in order to avoid premature crystallization of the sugar before surface impregnation has occurred to the desired degree.

The amount of the readily-crystallizable sugar composition applied to a given cookie dough will depend upon a number of parameters, including the concentration of readily-crystallizable sugar in the liquid sugar employed, the percentage of crystallization-resistant sugars in the cookie dough undergoing treatment, as well as the moisture content, overall permeability and physical size of the cookie dough being treated. In general, however, it is preferred to impregnate the cookie dough with an amount of the readily-crystallizable sugar (e.g. sucrose) component sufficient to provide at least about a 85% sucrose content (by weight of total sugars) in the impregnated portion of the dough. The foregoing is followed whether the chewiness is provided by including a crystallization-resistant sugar component in the dough, or by the enzymatic generation of the crystallization-resistant component in situ in the dough before and/or during baking. When enzymatic processes are employed, and especially when invertase is employed, the readily-crystallizable sugar component may be applied to the dough prior to the completion of baking, but after enzyme-inactivating temperatures have been reached in the dough.

The readily-crystallizable sugar composition may be applied to the cookie dough by a number of procedures, including brushing the composition onto a portion of cookie dough, briefly placing a portion of cookie dough in a bath of the readily-crystallizable component, etc. Preferably, however, the readily-crystallizable sugar component is applied as a spray onto the upper surface of a preformed bakeable chewy cookie dough which has been deposited in a drop-type manner on a baking pan or other suitable baking surface (e.g., stainless steel belt). The apparatus employed for this spray coating (e.g., a pressurized, atomizing nozzle) is employed at a height above the upper surface of the cookie dough, and at a spraying pressure sufficient to cause the dissolved sucrose to achieve some degree of penetration into or intermixing with the cookie dough, preferably just below the surface thereof. During baking the spreading of the chewy cookie dough also will assist in the incorporation of the sucrose within the surface of the dough so as to insure that the final baked cookie is substantially crumb-continuous, i.e., does not present a sucrose-glazed or sucrose-iced appearance.

The desired penetration and intermixing of the crystallizable sugar into the chewy cookie dough necessarily will result in intermixing of at least a portion of the crystallizable sugar with the crystallization-resistant sugars employed in the chewy cookie dough. The degree to which such intermixing might otherwise adversely affect the added sucrose, by inhibiting or slowing its crystallization, is controlled to insure that sufficient sucrose crystallization occurs for development of the desired crisp texture. For example, the crystallization-resistant sugar component of the chewy dough can be formulated so as to contain a mixture of normally crystallizable sugars and a quantity of crystallization-resistant sugars or other materials only minimally above the level required to inhibit crystallization of the normally crystallizable sugars. Preferably, above about 75% to about 80% crystallizable sugar (based on total sugars) will be present in the dough prior to surface impregnation. Sucrose added by way of the sprayed sucrose solution will thereby encounter an insufficient quantity of crystallization-resistant sugars or other materials to inhibit its crystallization in what will become the crispy portion of the baked product.

Alternatively, in situ generation of the crystallization-resistant sugar component in the chewy cookie dough (via the enzymatic process described above) can be employed in a manner such that the sucrose added in the sprayed component has substantially crystallized prior to the generation of otherwise inhibitory amounts of crystallization-inhibiting sugars or other materials in the chewy dough. Still further, the sucrose concentration of the sprayed component can be chosen to be sufficiently high to tolerate a portion thereof becoming crystallization-resistant by virtue of interaction with components of the dough bakeable to the chewy portion, while sufficient unaffected portions are free to crystallize to form the desired crisp testure.

The surface impregnation of the dough bakeable to a chewy cookie with the readily-crystallizable sugar composition provides crispy, dry regions in the finally baked product corresponding to the regions of the dough which have been surface impregnated prior to baking. Thus, the desired proportion of chewy to crispy regions in the baked product is achieved by controlling the amount of the dough which is impregnated prior to baking. Preferably, the amount of chewy dough which is surface impregnated, relative to the amount of dough which is not impregnated, provides a cookie having a crispy-chewy textural dichotomy characteristic of a freshly-baked cookie product. Thus, a bakeable dough may be prepared in accordance with the process of this invention wherein the weight ratio of dough productive of a chewy region relative to impregnated dough productive of a crispy region is about 0.8-3.0:1, and preferably about 1:1.

In an alternative embodiment of the present invention, a preformed chewy cookie dough is punctured or otherwise penetrated to provide a porous network along portions of its surface (including top, bottom and/or sides of a cookie-shaped dough portion) for assisting the subsequent impregnation therein of the readily-crystallizable sugar composition. Puncturing means utilized in the baking industry, such as dockers used for providing holes in the surface of doughs used in the manufacture of crackers, can be suitably employed for this purpose. Preferably, the depth of penetration of the puncturing device is controlled so as to limit penetration to a depth just below the surface or surfaces of the preformed chewy dough. Thus, the depth of each penetration may comprise from about 3% to about 10% of the total cross-sectional width of the cookie when baked. Moreover, the diameter and density of punctures on the surface of the cookie may be adjusted as desired to enhance the impregnation process. The diameter of each puncture may be about .1 mm to about .7 mm, with each puncture being separated from its nearest neighboring puncture by about 1.5 mm to about 10 mm. The punctures may extend entirely over the surface, or only over portions of the surface of the dough, as desired.

After applying the readily-crystallizable sugar composition to the punctured dough, the resultant composition can be subjected, either prior to baking or during early states of baking, to means for closing the pores on the surface of the dough as aesthetic considerations may dictate. For example, the composition can be caused to pass under a suitably adjusted doctor blade or roller in order to obtain a gentle spreading of the dough sufficient to substantially close off the pores and provide a continuous surface appearance.

The puncturing technique also can be combined with the application of the readily-crystallizable sugar composition in a single-step operation, wherein the puncturing means is adapted to inject pre-determined quantities of fluid materials from one or more syringe-type needles or the like into the cookie dough.

As in the earlier-described embodiments, the concomitant desire to achieve a sufficient degree of penetration of readily-crystallizable material into the chewy dough to avoid the formation of an iced or glazed appearance, as well as the desire to avoid too extensive an interaction between the penetrating component and materials within the chewy dough which might adversely inhibit development of crispness can be achieved by means of appropriate formulation variations or processing techniques.

In addition, variations of the above described methods can be employed. For example, the preformed cookie dough bakeable to a chewy cookie product can be baked for at least a portion of its total baking time before it is coated, sprayed or impregnated with the liquid readily-crystallizable sugar containing component.

As will be apparent from the foregoing description, the present invention permits the preparation of cookies having a combined crispy/chewy texture by means which are far more easily adapted to high-speed machinery (e.g., puncturing, spraying, coating) than the means required either where dough laminates are employed or where carefully controlled enzymatic processes are involved.

The invention is further described with respect to the following non-limiting example.

EXAMPLE I

Two separate batches of chewy cookie doughs were prepared, one from each of the following formulas:

Formula A

| Ingredient | Amount |
|---|---|
| Sucrose | 477 g. |
| Margarine (Blue Bonnet) | 1 cup |
| Ginger | 4 tsp. |
| Cinnamon | 2 tsp. |
| Baking Soda | 2 tsp. |
| Salt | 2 tsp. |
| Vanilla | 2 tsp. |
| Eggs | 4 whole |
| Honey (Wilton Gold) | 690 g. |
| Sifted Flour (Peavy) | 6 cups |

Formula B

| Ingredient | Amount |
|---|---|
| Sucrose | 796 g. |
| Margarine (Blue Bonnet) | 1 cup |
| Ginger | 4 tsp. |
| Cinnamon | 2 tsp. |
| Baking Soda | 2 tsp. |
| Salt | 2 tsp. |
| Vanilla | 2 tsp. |
| Eggs | 4 whole |
| Honey (Wilton Gold) | 264 g. |
| Sifted Flour (Peavy) | 6 cups |
| Water | 72 g. |

As can be seen, the two formulations were identical except that the ratio of honey to sucrose was varied. Water was added to Formula B to compensate for the moisture lost by using less honey in the formulation.

The sugar content of the honey used in the formulations, Wilton Gold, was analyzed by the high pressure liquid chromatography method recommended by the Association of Official Analytical Chemists (AOAC) in Method No. 31.138 (1980 AOAC 13th Ed.). The sugar content of the honey was determined to be 36.96 weight percent fructose, 38.52 weight percent dextrose, 0 weight percent sucrose and 0 weight percent maltose. Based on this analysis, the crystallization-resistant sugar content of each formula stated as a percentage of total sugars present was about 50% for Formula A and about 18% for Formula B.

Both formulations were prepared according to the following procedure. The sucrose, margarine, ginger, cinnamon, baking soda, salt and vanilla were combined in a Hobart mixer and creamed at low speed for about four minutes until the mixture was light and fluffy. The eggs were added and the mixture was beat at medium speed for about three minutes until it was very fluffy. The honey and water, if any, were then blended in. Finally, the flour was added a little at a time and blended in the Hobart mixer at low and then high speeds. After mixing, the dough was refrigerated for about one hour.

Cookies were prepared from each of formulations A and B described above. One ounce portions of each of the doughs were placed on cookie sheets and then sprayed with an atomized solution of 750 grams of sucrose in 500 grams of water. The sprayed cookie dough preforms were then baked at 350°F for 18 minutes. The cookies were allowed to cool and then were sealed in airtight packages.

After storage for 14 days the packages were opened and the cookies examined. Each of the cookies exhibited regions of crispy crumb structure and regions of chewy crumb structure. The crumb structure of the top and outside portions of the cookies was dry and crisp in relation to the crumb structure of the inner portions which was moist and chewy. The exterior crumb structure of the Formula A cookies was not as crisp as that of the Formula B cookies. Furthermore, the sucrose solution appeared to have been absorbed into the exterior crumb layer of the cookies. None of the cookies exhibited a glazed or iced appearance.

CLAIMS

1.   A method for preparing a dough which is bakeable to a substantially crumb-continuous, flour-based baked product having discrete storage-stable regions of crumb having a crispy texture and discrete storage-stable regions of crumb having a chewy texture, said method comprising the steps of:

a.   preparing a dough or batter bakeable to a chewy crumb structure;   and

b.   impregnating at least a portion of said dough or batter with an amount of a solution of a readily-crystallizable sugar  sufficient to provide a region in said dough or batter bakeable to a crispy crumb texture;

c.   said partially impregnated dough being bakeable to provide a final baked product in which there is present, after equilibration of the moisture therein, discrete regions of crumb contributed by said impregnated portions having a crispy texture, and regions of crumb having a chewy texture.

2.   The method according to Claim 1 wherein said dough is bakeable to a cookie, the readily-crystallizable sugar comprises sucrose, and said dough or batter bakeable to a chewy product is comprised of water, flour, shortening and sugar, wherein said sugar is comprised of at least about 15% by weight of a crystallization-resistant sugar.

3.   The method according to Claim 2 wherein said readily-crystallizable sugar solution is sprayed onto said dough to provide in said impregnated portions above about 85% by weight sucrose based on the total sugar content of said impregnated portion

4. The method according to Claim 3 wherein at least portions of the surface of said dough are punctured prior to applying said solution of readily-crystallizable sugar.

5. The method according to Claim 2 wherein portions of said dough are impregnated by the flow of an aqueous solution of sucrose from puncturing means and into said dough.

6. The method according to Claim 2 wherein said crystallization-resistant sugars are selected from the group consisting of fructose, invert sugar, honey, high fructose corn syrup, dextrins and maltose.

7. The method according to Claim 1 wherein said dough is bakeable to a cookie, said readily-crystallizable sugar comprises sucrose, and said dough or batter bakeable to a chewy crumb structure further comprises an enzyme capable of acting upon at least one ingredient in said dough to provide in the baked portions of said dough which are not impregnated an amount of crystallization-resistant sugar effective to bind water and to inhibit the crystallization of any readily-crystallizable sugar present in the portions of dough which have not been impregnated.

8. The method according to Claim 7 wherein said enzyme is invertase, said ingredient is sucrose, and said crystallization-resistant sugar comprises invert sugar.

9. The method according to Claim 7 wherein said enzyme comprises a carbohydrase enzyme selected from the group consisting of alpha-amylase, glucosidase and mixtures thereof, capable of acting upon at least a portion of the starch present in said dough to provide in the portions of said baked dough which have not been impregnated an effective amount of a crystallization-resistant material selected from the group consisting of short-chain polysaccharides, disaccharides, monosaccharides and mixtures thereof.

-27-

10.  The method according to Claim 7, wherein said enzyme is alpha-amylase, said ingredient comprises starch, and said crystallization-resistant material comprises maltose and dextrins.

11.  The method according to Claim 7 wherein said enzyme is alpha-amylase and said ingredient in said dough which is acted upon by said enzyme is comprised of the starch fraction of flour and pregelatinized starch.

12.  The method according to Claim 11 wherein the weight ratio of pregelatinized starch to flour in said bakeable dough is about 1:1 to about 1:10.

13.  A method for preparing a substantially crumb-continuous, flour based baked product having discete storage-stable regions of crumb having a crispy texture and discrete storage-stable regions of crumb having a chewy texture, which method comprises the further step of baking a dough produced by a method according to any preceding claim.